# EUROPÄISCHE PATENTSCHRIFT

(11) **EP 3 148 325 B1**
(45) Veröffentlichungstag und Bekanntmachung des Hinweises auf die Patenterteilung: **04.04.2018**
(21) Anmeldenummer: 15726912.7
(22) Anmeldetag: 27.05.2015
(51) Int. Cl.: A01K 63/04, A01K 63/06

(54) **VERFAHREN UND KREISLAUFANLAGE ZUR HÄLTERUNG VON WASSERLEBEWESEN**
METHOD AND CIRCULATION SYSTEM FOR HOLDING AQUATIC ORGANISMS
PROCÉDÉ ET INSTALLATION EN CIRCUIT FERMÉ POUR LA STABULATION D'ORGANISMES AQUATIQUES

(30) Priorität: 27.05.2014 DE 102014107431
(43) Veröffentlichungstag der Anmeldung: 05.04.2017
(73) Patentinhaber: Vonnemann, Gerhard, 23552 Lübeck (DE)
(72) Erfinder: Vonnemann, Gerhard, 23552 Lübeck (DE)
(74) Vertreter: Mierswa, Klaus
(86) Internationale Anmeldenummer: PCT/EP2015/061674
(87) Internationale Veröffentlichungsnummer: WO 2015/181218

(56) Entgegenhaltungen:
- DE-A1- 2 851 808
- US-A1- 2008 028 667
- US-B1- 8 651 058

## Beschreibung

Die Erfindung betrifft ein Verfahren zum Hältern von Fischen oder anderen im Wasser lebenden Arten in einer Kreislaufanlage mit mindestens einem Hälterungsbecken, mindestens einem biologischen Filter sowie ggf. weiteren Wasserbehandlungseinheiten, z.B. zum Eintragen von Sauerstoff zum Entkeimen, zum Entschäumen, zum mechanischen Filtern etc..

Außerdem betrifft die Erfindung eine Kreislaufanlage.

Hälterungsbecken zur Aufzucht von Fischen sind allgemein bekannt. Ein solches Becken wird beispielsweise in der europäischen Patentschrift EP 000002429282 B1 beschrieben. Kreislaufanlagen und deren Bestandteile sind auch Gegenstand der deutschen Offenlegungsschriften DE 000019957954 A1, DE 102007002584 A1, DE 102007034219 A1, DE 202013005045 U1, DE 82 12 984 U1, DE 195 21 037 A1, DE 20 2008 013 223 U1, DE 198 47 027 A1, DE 20 2011 104 085 U1, DE 10 2009 037 767 A1 und der GB 2 407 468 A.

In Zeiten verringerter Anlandungen von wild gefangenen Fischen wird die Aquakultur immer wichtiger. Mittlerweile hat der Anteil von gezüchteten Fischen am gesamten Markt ca. 50 % erreicht. Die durch die Aquakultur erzeugten Umweltbelastungen sind Gegenstand der Kritik. Für die Forellenproduktion im Fließkanal werden beispielsweise ca. 200.000 I/Kilogramm Fisch benötigt. Aus diesen Gründen ist man dazu übergegangen, geschlossene Kreislaufanlagen einzusetzen. Diese verbrauchen pro Kilogramm Fisch ca. 52 I. Im Vergleich dazu wird bei der Produktion von Rindfleisch pro Kilogramm 120 l Trinkwasser verbraucht. Rechnet man den Wasserverbrauch für die Produktion der jeweiligen Futtermittel hinzu, so steht einem Verbrauch von 1218 l/Kilogramm Fleisch beim Fisch 3918 I bei der Geflügelproduktion, 4856 l bei der Schweinefleischproduktion und 15.495 l bei der Rindfleischproduktion gegenüber.

Zum Teil resultiert der Trinkwasserverbrauch aus der unterschiedlichen Futterverwertung. Der wechselwarme Fisch benötigt 1,4 kg Futter pro Kilogramm Zuwachs, Geflügel 1,5-2,0 kg, Schweine 2,5-4,5 kg und Rinder 5,5-10 kg Futter pro Kilogramm Zuwachs.

Vergleicht man den Nährstoffaustrag, d.h. die Exkretion an Stickstoff und Phosphor von Säugetieren mit denen von Fischen und Geflügel, so liegen wiederum die Vorteile bei der Fisch- und Geflügelzucht gegenüber der Aufzucht von Säugetieren, weil der Nährstoffaustrag von Säugetieren mehr als das Doppelte dessen von Fischen und Geflügel beträgt.

Mittlerweile stützen sich insbesondere asiatische Volkswirtschaften zu einem großen Teil auf die Produktion von Krusten- und Schalentieren. Zur Verhinderung von Krankheiten werden bei der Produktion jedoch bedenklich hohe Mengen an Chemikalien und Antibiotika eingesetzt, damit die Produktion stabil bleibt. Der Weg aus diesen Produktionsregionen in die Zielmärkte ist weit und kann deshalb nur im gefrorenen Zustand der Ware überbrückt werden. Aus diesem Grunde ist es wünschenswert, Meeresorganismen, die in warmen Gewässern heimisch sind, auch in kälteren Klimazonen in Verbrauchernähe kultivieren zu können. Durch die für diesen Zweck geeigneten Anlagen entsteht jedoch ein Investitionsaufwand, der dazu führt, dass die Erlöse den Aufwand nicht mehr decken.

Wesentlicher Kostenbestandteil bei der Aufzucht von Fischen in der extensiven Fischzucht ist der Flächenverbrauch für die notwendigen Hälterungsbecken. Beispielsweise hat Indien die küstennahe Umwandlung von Flächen in Fischzuchtbetriebe untersagt. Auch bei der intensiven Fischzucht in Kreislaufanlagen erfordert die Bereitstellung der Hälterungsbecken einen großen finanziellen Aufwand. Die Becken werden beispielsweise aus kunstharzgebundenen Beton vorgefertigt und die Einzelteile dann an der Baustelle zusammengefügt. Die Herstellung dieser hochpräzisen Fertigteile und der Transport zur Baustelle und deren Montage sind wesentliche Kostenelemente. Als Matrixmaterial kommen aus der Zahnheilkunde bekannte Kunststoffe zum Einsatz, die zusätzlich die Herstellungskosten erhöhen.

Es besteht ein dringendes Bedürfnis an Kreislaufanlagen, die bei geringerem Investitionsaufwand eine Produktion von Fischeiweiß bei geringeren laufenden Kosten insbesondere bei Warmwasserlebewesen ermöglicht.

Die US 8651058 B1 betrifft ein System für die Aquakultur in geschlossenen Tanks. Zu diesem Zweck wird vom Wasser abgegebenes Gas von einem Saugzug aus dem Luftraum des Tanks abgesaugt. Ein Belüfter pumpt Frischluft zu einem Blasenbildner zur Dispersion der Luft im Wasser. Entstehende Abbauprodukte im Wasser werden Pflanzen zur Reinigung zugeführt.
Die US2008028667 A1 betrifft eine Vorrichtung zur transportablen Hälterung von Lebendködern, wie z.B. Fischen. Die Vorrichtung umfasst einen innenliegenden mit Wasser gefüllten Köderbehälter, einen diesen umhüllenden äußeren Behälter. Ein Zwischenraum ist mit einem Eiswassergemisch als Wärme- bzw. Kältepuffer befüllt. Die Belüftungsanordnung umfasst einen Leitungsabschnitt, der durch einen Wärme- bzw. Kältepuffer geleitet wird und in der Wassermenge endet, um diese zu belüften. Der Luftstrom, der durch den Leitungsabschnitt temperiert worden ist, belüftet die Wassermenge und ermöglicht eine Wärmeübertragung zwischen der Luft und der Wassermenge zur Steuerung der Luft- und / oder Wassertemperatur, um den Köder am Leben zu halten.

Die DE 2851808 A1 betrifft eine Einrichtung für ein Fischgewässer, welches durch Energiezufuhr erwärmt ist. Zur weiteren Erwärmung über sein natürliches Temperaturniveau hinaus, wird die Ausnutzung eines natürlichen Wärmepotentials vorgeschlagen, wie die Erwärmung mittels Sonnenkollektoren, die schwimmen. Weiter wird vorgeschlagen, durch eine Einrichtung, warme Luft einzublasen, zwecks Erwärmung und Steigerung des Sauerstoffgehalts des Wassers.

Aufgabe der Erfindung ist folglich ein Verfahren und eine Kreislaufanlage zur Hälterung von Wasserlebewesen vorzuschlagen, die mit geringerem technischem Aufwand die Betriebskosten wesentlich vermindern.

Diese Aufgabe wird durch die Merkmale des Patentanspruchs 1 und 11 gelöst.

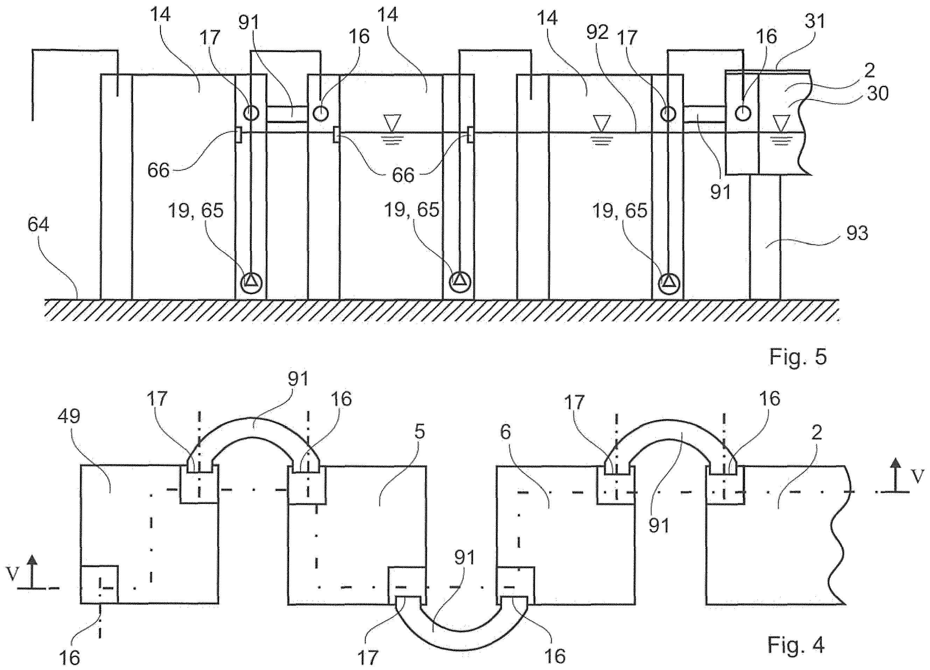

Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.
[A1] Bei einem Verfahren zum Hältern von Fischen oder anderen im Wasser lebenden Arten in einer Kreislaufanlage mit mindestens einem Hälterungsbecken, mindestens einem biologischen Filter sowie ggf. weiteren Wasserbehandlungseinheiten z.B. zum Eintragen von Sauerstoff, zum Entkeimen , zum Entschäumen , zum mechanischen Filtern etc. gelingt die Lösung der Aufgabe, wenn der Anlage durch Verbindungsleitungen, mindestens einer Zuluftleitung Zuluft zu einem oberhalb eines Wasserspiegels im Hälterungsbecken gebildeten Hohlraum zugeleitet und durch mindestens einer Abluftleitung Abluft von oberhalb des Wasserspiegels gebildeten Hohlraum abgeführt wird, wobei Zu- und Abluft durch einen Wärmetauscher geleitet wird, in dem in der Abluft enthaltene Wärme auf die Zuluft übertragen wird und/oder die Zuluft auf das Temperaturniveau des Hälterungsbeckens angehoben wird.
[A2] In Ausgestaltung des Verfahrens ist vorgesehen, dass die Zuluft angefeuchtet wird. Durch das Anfeuchten werden Verdunstungsverluste des Wasserkreislaufs vorteilhaft verringert. Demselben Zweck dient die Maßnahme, dass dies vorzugsweise bis zur Sättigung der Zuluft erfolgt. Dabei werden lange Leitungswege vermieden, wenn dies insbesondere unter Verwendung von anfallendem Kondensat geschieht.
[A3] In weiterer Ausgestaltung des Verfahrens wird vorgeschlagen, dass das Hälterungsbecken und mindestens eine Wasserbehandlungseinheit parallel an die Zuluft- und Abluftleitung geschaltet sind. Dadurch kann die Anlage einfach durch weitere Becken und Einheiten vergrößert werden.
[A4] Mit Vorteil kann der Energiebedarf weiter gesenkt werden, indem zur Sauerstoffanreicherung des Wassers eine Oberflächenbelüftung erfolgt. Eine solche kann vorzugsweise mittels eines Wellbahnbelüfters durchgeführt werden. Dabei hängen in einer Belüftungskammer profilierte Bahnen, die durch ein darüber gelegenes Lochblech gleichmäßig mit Wasser beaufschlagt werden. Das Wasser fließt nach unten in ein unterhalb der Bahnen angeordnetes Auffangbecken. Das Wasser ist dann sauerstoffgesättigt.
[A5] Der Wasserkreislauf verliert keine Wärme, weil mit Vorteil die Zuluft im vorgewärmten Zustand in den Hohlraum unterhalb einer Abdeckung des Hälterungsbeckens zugeführt wird.
[A6] Die Kosten für die Ergänzung des Kreislaufs mit Wasser können dadurch verringert werden, dass im Wärmetauscher anfallendes Kondensat in den Wasserkreislauf eingespeist wird.
[A7] Weitere Wärmeverluste werden mit Vorteil vermieden, wenn mindestens das Becken und/oder das biologische Filter eine Abdeckung aufweist, wobei ein Hohlraum zwischen Wasseroberfläche und Abdeckung des Hälterungsbeckens entsteht, aus dem über eine Leitung Luft für die Nitrifikation durch das Filter gedrückt wird.
[A8] Wenn Luft von einem Gebläse über Leitungen als Frischluft zunächst einem Becken oberhalb der Wasseroberfläche zugeführt wird, vorzugsweise so, dass sich eine zur Wasserströmung entgegengesetzte Luftströmung ergibt, kann der Sauerstoff im Wasser durch eine zusätzliche Oberflächenbelüftung ergänzt werden.
[A9] Die Leitungswege können verkürzt werden, wenn für eine Nitrifikationsstufe notwendige Luft aus dem Hohlraum über einem Becken abgesaugt wird und mit Wasserdampf gesättigt sowie mit annähernder Wassertemperatur einer Nitrifikationsstufe zugeführt wird.
[A10] Dadurch, dass Luft über eine Ansaugleitung aus dem Hohlraum des Beckens (Figur 5) unterhalb der Abdeckung und über Leitung wieder unterhalb des Wasserspiegels in das Modul zur Nitrifikation eingeblasen wird und über eine Öffnung als Abluft in eine Abluftleitung geführt wird, aus der ein Saugzug die Abluft durch den Wärmetauscher in die Atmosphäre entlässt, können auch Geruchsbelästigungen mit Vorteil vermieden werden.

Besonders vorteilhaft ist es, wenn als Material zur Herstellung der Becken und/oder der Wasserbehandlungseinheiten geschäumter Kunststoff mit einer äußeren Kunststoffarmierung verwendet wird. Mit Vorteil wird das geschäumte Material auch zur Abdeckung des Hälterungsbeckens und gegebenenfalls auch zur Abdeckung weiterer Wasserbehandlungseinheiten verwendet.

In einigen Fällen kann überraschenderweise sogar weitgehend auf eine zusätzliche Beheizung des im Kreislauf geführten Wassers verzichtet werden, da der Wärmeeintrag durch die im Kreislauf verwendeten Pumpen und durch eine mit UV-Licht vorgenommene Entkeimung ausreicht, um das Wasser auf gleichbleibender Temperatur zu halten.

Überraschenderweise kann durch diese wärmegedämmte Beckenwandung die Anlage auch im Freien aufgestellt werden, was eine weitere Verringerung des Investitionsaufwandes für Hallenbauten ermöglicht. In solchen Fällen ist es von besonderem Vorteil, wenn das Hälterungsbecken und gegebenenfalls weitere Wasserbehandlungseinheiten abgedeckt werden. Dadurch wird nicht nur ein Schadstoffeintrag von außen verhindert, sondern auch Wärmeverluste durch Abstrahlung und Verdunstung über die Wasseroberfläche des Hälterungsbeckens vermieden. Besonders geeignet erscheinen Plattenstärken zwischen 30 und 80 mm, insbesondere von 40-60 mm, vorzugsweise von 50 mm.
[A11] Die Vorrichtungsaufgabe wird bei einer Kreislaufanlage dadurch gelöst, dass die Kreislaufanlage eine Zuluftleitung zur Zuführung von Frischluft und eine Abluftleitung zur Abführung von Abluft aufweist, wobei Verbindungsleitugen zu oberhalb eines Wasserspiegels in den Hälterungsbecken gebildeten Hohlraums, mindestens einem biologischen Filter sowie ggf. weiteren Wasserbehandlungseinheiten z.B. zum Eintragen von Sauerstoff (5), zum Entkeimen, zum Entschäumen, zum mechanischen Filtern etc. für einen Luftaustausch vorgesehen sind und ein Wärmetauscher vorgesehen ist, um die Wärme aus der Abluft zurückzugewinnen und die Zuluft auf das Temperaturniveau des Hälterungsbeckens zu erwärmen.
[A12] Dadurch, dass mindestens ein Modul, insbesondere eine Wasserbehandlungseinheit zur Denitrifikation oder Nitrifikation, mit einer mindestens teilweise eintauchenden Haube versehen ist, können die im biologischen Filter entstehenden Gase oder eingeblasenen Gase aufgefangen werden. Bei der Denitrifikation wird ein inertes Gas innerhalb des Filters im Kreis geführt. Durch die eintauchende Bauweise der Haube kann das Filtermodul ohne weitere Dichtungen auskommen. Diese Ausgestaltung führt für die Bildung des Bio Filters zu einem vorteilhaft geringen technischen Aufwand. Aus dem unter der Haube gesammelten Gasvolumen kann eine Pumpe, die vorteilhaft auf der Haube direkt angeordnet ist, das Gas absaugen um es wieder in den tieferen Bereich des mit Aufwachskörpern befüllten und wassergefüllten Bioreaktors zurückzuführen, um so anaerobe Wachstumsbedingungen für die Mikroorganismen aufrecht zu erhalten.

In analoger Weise kann auch für ein Modul zur Nitrifikation von der Haube profitieren.
[A13] In weiterer Ausgestaltung der Erfindung ist vorgesehen, dass mindestens ein Modul, insbesondere eine Wasserbehandlungseinheit zur Nitrifikation, eine Ansaugleitung zu einem Hohlraum unter der Abdeckung des mindestens einen Hälterungbeckens aufweist. Bei Denitrifikation wird der Inhalt des Bioreaktors, der aus Aufwachskörpern und Wasser besteht, mittels Luft umgewälzt, um aerobe Wachstumsbedingungen für die Mikroorganismen zu schaffen. Der durch diese Wasserbehandlungseinheit zur Nitrifikation durchgesetzte Luftstrom führt zu überraschend hohen Wärmeverlusten. Insbesondere wird bei marinen Kreislaufanlagen und Temperaturen von ca. 30 °C die angesaugte Luft in ihrer Temperatur zunächst auf die hohe Wassertemperatur angehoben und mit Wasserdampf gesättigt. Erfindungsgemäß ist vorgesehen, dass der für die Nitrifikation erforderliche Luftstrom aus dem Hohlraum oberhalb der Wasseroberfläche das Hälterungsbeckens entnommen wird. Diese Luft hat bereits die Wassertemperatur und ist üblicherweise auch mit Wasserdampf gesättigt, so dass diese Wärmeverluste mit Vorteil vermieden werden.
[A14] Durch die Maßnahme, dass mindestens ein Modul, insbesondere eine Wasserbehandlungseinheit zur Nitrifikation, eine Abluftleitung zu einem Rekuperator aufweist, wobei der Rekuperator eine Auslassleitung zum Hohlraum unter der Abdeckung des mindestens einen Hälterungbeckens aufweist, wird die in der Abluft vorhandene Wärme wieder zurück gewonnen und für die Vorwärmung der aus der Umgebung angesaugten Luft genutzt. Erst im vorgewärmten Zustand wird die Luft dann wieder in den Hohlraum unterhalb der Abdeckung des Hälterungsbeckens zurückgeführt. Das im Rekuperator anfallende Kondensat gibt dabei zusätzlich Wärme zur Vorwärmung der angesaugt Luft ab. Außerdem kann das Kondensat zurück in den Kreislauf eingespeist werden. Statt eines Rekuperators können auch andere Wärmetauscher genutzt werden.

Mit Vorteil wird in den Hohlraum unter der Abdeckung des Hälterungsbeckens ein leichter Unterdruck aufrechterhalten. Dadurch tritt kein Wasserdampf in die Umgebung aus, der sonst korrodierend auf die Anlagenteile wirkt. Auch das Hälterungswasser wird durch den Unterdruck tendenziell entgast.
[A15] Wenn zur Sauerstoffanreicherung des Wassers ein Oberflächenbelüfter vorgesehen ist, kann der notwendige Sauerstoff mit vorteilhaft geringem Energieaufwand in das Kreislaufwasser eingebracht werden.

Auf diese Weise ist eine Kreislaufanlage für die Hälterung von Fischen und anderen im Wasser lebenden Organismen geschaffen, die mit überraschend geringem Aufwand herzustellen ist und auch für zukünftige wachsende Produktionsmengen bequem skalierbar ist. Die erfindungsgemäße Anlage ermöglicht eine Aufzucht von marinen Lebewesen auch unter den Bedingungen eines gemäßigten Klimas. Besondere Vorteile bietet die Anlage für Kreislaufanlagen mit einer Temperatur von ca. 30 °C, die zur Aufzucht im Hälterungbecken von Garnelen, insbesondere der Art Litopaeneus Vanamei, geeignet ist.

Eine bevorzugte Ausführungsform der Erfindung wird beispielhaft an Hand einer Zeichnung erläutert.

Die Figuren der Zeichnung zeigen im Einzelnen:
- Figur 1: einen Schnitt durch eine beidseitig armierte Schaumstoffplatte,
- Figur 2: eine Aufsicht auf die in Figur 1 dargestellte beidseitig armierte Schaumstoffplatte
- Figur 3: ein Schaltschema einer Kreislaufanlage,
- Figur 4: eine schematisierte Aufsicht auf erfindungsgemäß verkettete Module,
- Figur 5: einen Vertikalschnitt durch die in Figur 4 dargestellten Module gemäß Schnittlinie V-V in Figur 4,
- Figur 6: eine schematisierte Seitenansicht auf zwei verkettete erfindungsgemäße Module,
- Figur 7: einen Vertikalschnitt durch ein schematisiert dargestelltes Modul zum Denitrifizieren,
- Figur 8: eine Aufsicht auf das Modul gemäß Figur 7,
- Figur 9: einen Vertikalschnitt durch ein schematisiert dargestelltes Modul zum Nitrifizieren,
- Figur 10: eine Aufsicht auf das Modul gemäß Figur 9 und
- Figur 11: ein Schema zur Konditionierung der Zuluft.

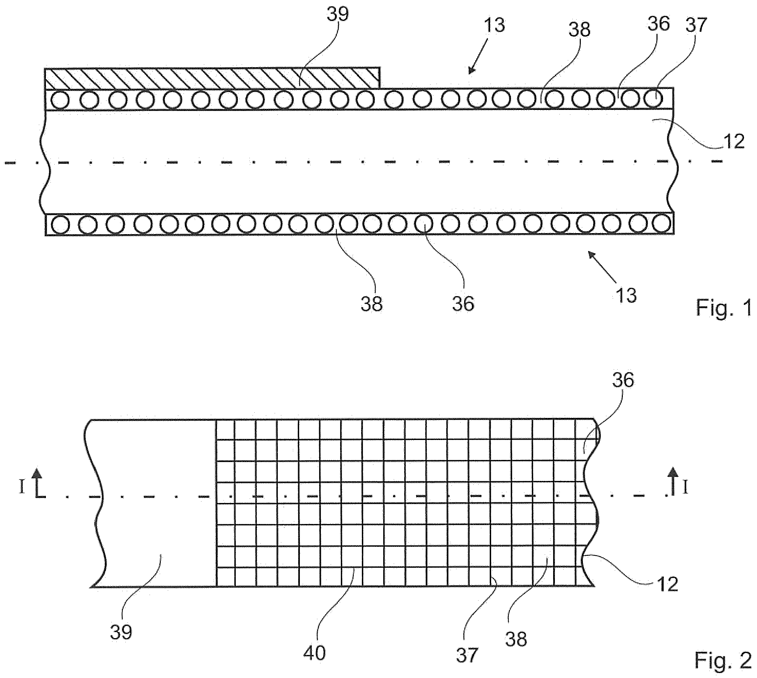

Der Schnitt gemäß Figur 1 zeigt die Schaumstoffplatte 12 mit den verstärkten Oberflächen 13. Als Verstärkung dient dabei ein Glasfasernetz 36 von dem im Vertikalschnitt nur die Schussfäden 37 erkennbar sind. Dieses Glasfasernetz ist innerhalb einer Materialmatrix 38 eingebettet, die das Glasfasernetz fest mit der Schaumstoffplatte 12, vorzugsweise einem Polystyrolschaum, verklebt. Als Materialmatrix 38 dient dabei ein kunstharzgebundener Beton. Zusätzlich ist auf einer Seite eine Druckarmierung 39 aus einem kunstharzgebundenen Feinputz gezeigt. Diese Armierung 39 nimmt bei Biegebeanspruchung und vertikaler Belastung die entstehende Druckspannung auf während das Glasfasernetz 36 auf der Unterseite die entstehenden Zugspannungen abträgt.

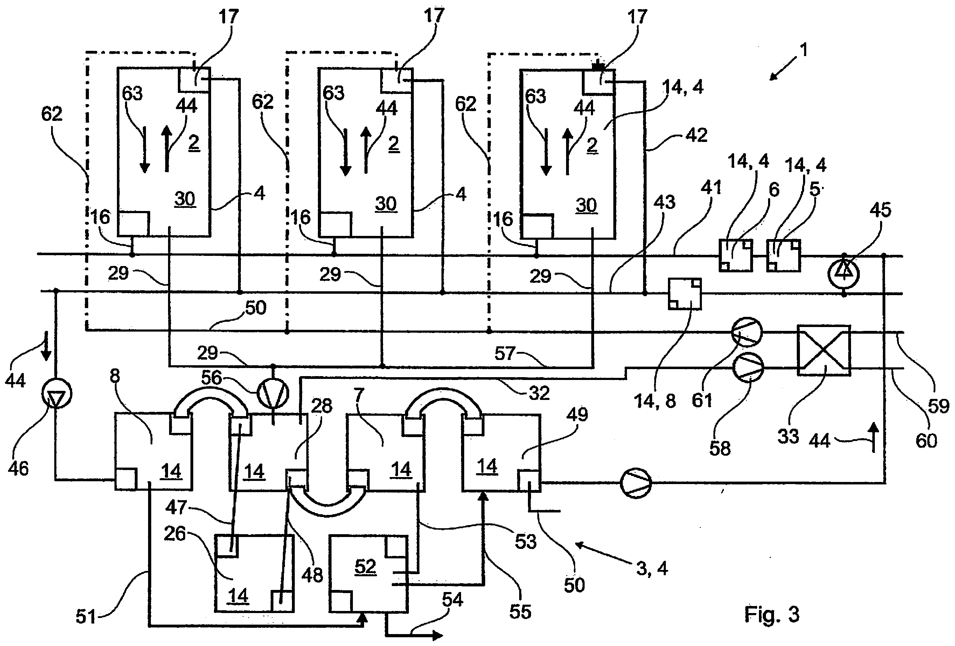

Figur 2 zeigt eine Aufsicht auf die beidseitig armierte Schaumstoffplatte 12: In dieser Ansicht sind auch die Kettfäden 40 des Glasfasernetzes 36 sichtbar. Das Schaltschema einer erfindungsgemäßen Kreislaufanlage 1 ist in Figur 3 dargestellt. In diesem Schema, das auch als Aufsicht gedeutet werden kann, sind die wesentlichen Bestandteile der Anlage in Form von unterschiedlichen Modulen 14 gezeigt. Trotzdem erhebt dieses Schema keinen Anspruch auf Vollständigkeit. Einige Komponenten fehlen. Es fehlen beispielsweise ein pH-Anpassung und Beheizung.

Der zentrale Bestandteil einer Kreislaufanlage ist das Hälterungsbecken 2. In diesem Fall sind drei parallel geschaltete Hälterungsbecken 2 dargestellt. Die Hälterungsbecken sind über einen Zulauf 16 an die Leitung 41 mit gereinigtem Wasser angeschlossen. Über den Ablauf 17 und Leitung 42 wird das aus Becken 2 ablaufende Wasser zur Brauchwasserleitung 43 geführt. Dadurch ergibt sich im Becken eine Strömung in Richtung 44. Der zur Aufrechterhaltung dieser Strömung notwendige Druckunterschied wird von der Zirkulationspumpe 45 erzeugt, die das Wasser aus Leitung 43 in Leitung 41 pumpt.

In der Leitung 41 sind in Serie zwei weitere Module 14 zwischen Pumpe 45 und den Becken 2 geschaltet, die als Wasserbehandlungseinheiten 4 dem Eintragen von Sauerstoff 5 und der Entkeimung 6 dienen. Das über die Abläufe 17 und Leitung 43 abgeführte Brauchwasser wird in Modul 14 einer mechanischen Filterung 8 unterzogen, bevor es wieder zur Zirkulationspumpe 45 gelangt. Auf diese Weise ist der Wasserumlauf durch die Becken geschlossen.

Dieser Kreislauf ist mit Besatz jedoch nur für kurze Zeit nutzbar. Er kann nur so lange betrieben werden, bis die durch Exkretion in das Wasser eingetragenen Stoffe letale Konzentrationen für den Besatz erreichen.

Um dieses zu verhindern ist in Serie mit den parallel geschalteten Hälterungsbecken 2 eine biologische Filtereinheit 3 geschaltet. Diese enthält eine weitere Zirkulationspumpe 46, die bei entsprechender Auslegung den gesamten Zirkulationsstrom aufrechterhält und Pumpe 45 abgeschaltet bleiben kann. Das von Pumpe 46 geförderte Brauchwasser wird zunächst in Modul 8 einer mechanischen Filterung unterzogen. Anschließend wird das Wasser dann einer Wasserbehandlungseinheit zur Nitrifikation 28 zugeführt.

Parallel zu dieser Wasserbehandlungseinheit 28 wird ein Teilstrom über Leitung 47 einer Wasserbehandlungseinheit zur Denitrifikation 26 zugeführt. Nach Behandlung wird der Teilstrom wieder mit dem die Nitrifikation verlassenden Teilstrom über Leitung 48 vereinigt, um dann in dem Abschäumer 7 von Eiweiß befreit zu werden und sich schließlich im Vorlaufbecken 49 zu sammeln. Dort wird über Leitung 50, das aus dem Kreislauf ausgeschleuste Wasser ergänzt.

Das in der mechanischen Filterstufe 8 erzeugte Filtrat wird über Leitung 51 einem Absetzbecken 52 zugeführt, in das auch das aus dem Entschäumer 7 abgezogene Eiweiß/Wassergemisch über Leitung 53 geleitet wird. Das in Absatzbecken 52 gesammelte Abwasser kann der Kanalisation zugeführt werden. Über Leitung 55 wird geklärtes Wasser aus dem Absatzbecken 52 in den Kreislauf zurückgeführt. Über Leitung 54 verlässt das eingedickte Filtrat den Kreislauf.

Die Luft für die Nitrifikation, die das Modul 28 durchströmt, wird von dem Gebläse 56 bevorzugt über Leitung 29 aus dem Hohlraum 30 zwischen Wasseroberfläche und Abdeckung des Hälterungsbeckens entnommen und dann durch das Modul 28 gedrückt.

Von dort gelangt die Abluft über Leitung 32 zum Saugzug 58, der die Abluft durch den Rekuperator 33 drückt. Die Luft tritt dann über Leitung 59 in die Atmosphäre aus. Der Rekuperator 33 erwärmt die durch Ansaugleitung 60 eintretende Luft über einen Wärmetauscher.

Diese Luft wird von Gebläse 61 über Leitungen 50 und 62 als Frischluft zunächst den Becken 2 zugeführt. Oberhalb der Wasseroberfläche der Becken 2 ergibt sich somit vorzugsweise eine zur Wasserströmung entgegengesetzte Luftströmung in Richtung 63.

Auf diese Weise wird die für die Nitrifikationsstufe notwendige Luft aus dem Hohlraum 30 über den Becken 2 abgesaugt (Figur 5) und mit Wasserdampf gesättigt sowie mit annähernder Wassertemperatur der Nitrifikationsstufe 28 zugeführt.

Die den Becken zugeführte Luft kann dazu genutzt werden, das Hälterungswasser mit Sauerstoff anzureichern und andere Gase wie Stickstoff und Kohlendioxid auszutreiben.

In den Figuren 4 und 5 sind schematisiert, d.h. in Figur 4 als Aufsicht, Figur 5 als Vertikalschnitt, die in Figur 3 gezeigten Module der biologischen Filtereinheit teilweise dargestellt.

Dabei soll das linke Modul 4 das Vorlaufbecken 49 darstellen. Aus diesem Vorlaufbecken 49 tritt das Wasser über Verbindungsleitung 91 in die Wasserbehandlungseinheit 5 zum Eintragen von Sauerstoff ein. Das mit Sauerstoff angereicherte Wasser wird über die weitere Verbindungsleitung 91 in die Wasserbehandlungseinheit zum Entkeimen 6 geleitet. Aus der Entkeimungsstation 6 tritt dann das Wasser über die Verbindungsleitung 91 in das Hälterungsbecken 2 ein. (Figur 4).

Zur Erzeugung der für den Wassertransport notwendigen Strömung können Module mit einem geringen natürlichen Gefälle aufgestellt werden. In Figur 5 ist unter Vernachlässigung des erforderlichen Gefälles das in allen Becken gehaltene Wasserniveau ungefähr identisch eingezeichnet. Damit das Hälterungsbecken 2 dieses Wasserniveau 92 bei geringer Wassertiefe ebenfalls erreicht, ist das Becken 2 auf Säulen 93 aufgeständert oder die Module unter Flurniveau 64 abgesenkt.

Alternativ zum Einrichten eines natürlichen Gefälles zwischen dem Zulauf 16 und dem Ablauf 17 können ergänzend oder stattdessen in den Schächten 19 auch Tauchpumpen 65 vorgesehen werden, die das Wasser in Abhängigkeit der Signale von einem oder mehreren Niveauwächtern 66 schalten. Diese Niveauwächter 66 lassen sich bequem auf der jeweils erforderlichen Höhe in den Schächten 19 befestigen. Auf diese Weise kann jedes Modul mit einer einfachen fest verdrahteten Steuerung ausgerüstet werden, die die Pumpen selbsttätig in Abhängigkeit des Wasserniveaus Ein- und Ausschalten. Eine solche primitive Steuerung weist eine wesentlich höhere Betriebssicherheit auf als zeitgemäße speicherprogrammierbare Steuerungen.

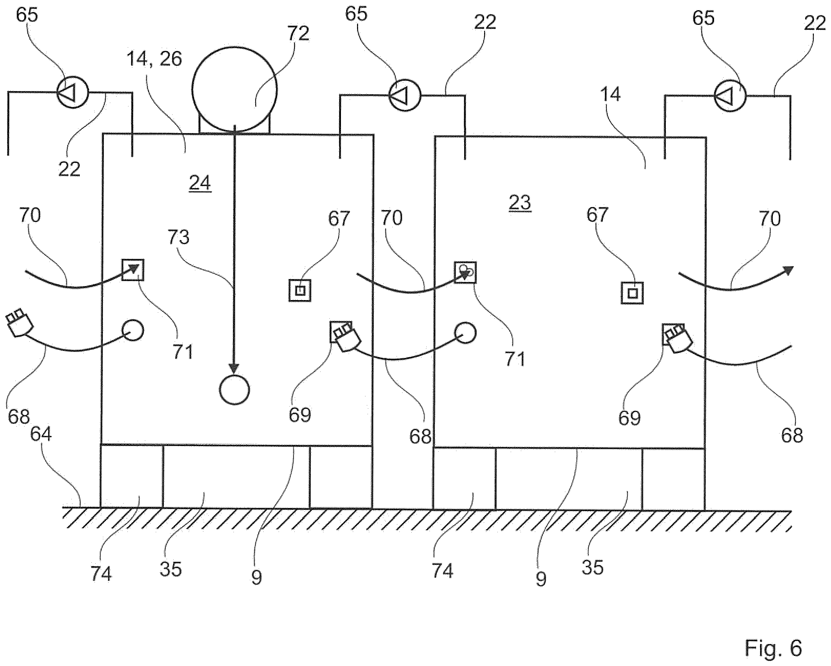

Figur 6 zeigt die Außenansicht derartiger verkettbarer Module 14. Jedes Modul verfügt über einen eigenen Ein-und Ausschalter 67. Zusätzlich verfügt jedes Modul über ein Versorgungskabel mit Anschlussstecker 68, das in die schaltbare Steckdose 69 des benachbarten Moduls einsteckbar ist. Über das Signalkabel 70 werden die Signale des Niveauwächters dem benachbarten zu Verfügung gestellt, damit eine in einem Schacht angeordnet Tauchpumpe in Abhängigkeit der Schaltsignale von der Steuerung geschaltet werden kann.

Hydraulisch wird und der Wasserkreislauf 22 über die Tauchpumpen 65 geschlossen. Dabei kann ein Modul als Master 23 und die übrigen als Slaves 24 geschaltet werden.

Die so ausgebildeten Module können elektrisch auch zu einer Ringsstruktur verbunden werden. An geeigneter Stelle wird zu der auf Niedervoltniveau betriebenen Steuerung eine Verbindung zu einer Notstromversorgung hergestellt. Für die Notstromversorgung der mit üblicher Netzspannung betriebenen Gebläse, Pumpen und dergleichen muss zusätzlich ein Notstromaggregat mit Verbrennungsmotor zur Verfügung gestellt werden.

Die in Figur 6 linke Einheit dient zur Denitrifikation. Deshalb ist ein Gebläse 72 dargestellt, dass vorhandenes Inertgas aus dem Modul absaugt und über Leitung 73 zurück in das Modul 14 bläst.

Die Module 14 in Figur 6 stehen beide mit ihrem Boden 9 auf Klötzen 74. Zwischen diesen und dem Flurniveau 64, bildet sich damit eine Tasche 35, in die die Zinken eines Gabelstaplers eingefahren werden können. Das Modul kann somit leicht versetzt werden.

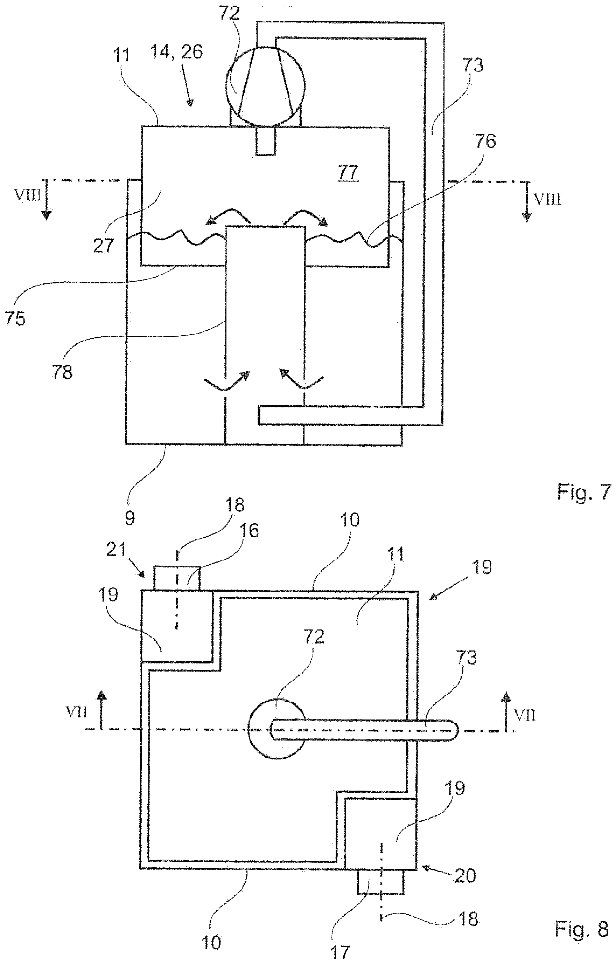

Das in Figur 6 dargestellte linke Modul 14, die Einheit zur Denitrifikation 26 des Zirkulationswassers, ist als Vertikalschnitt in Figur 7 und als Aufsicht in Figur 8 gezeigt. Das Gebläse 72 ist auf der Abdeckung 11 montiert. Abdeckung 11 ist dabei als Haube 27 gestaltet, die mit ihrer unteren Kante in den Wasserspiegel 76 eintaucht und so einen Gasraum 77 bildet, aus dem das Gebläse 72 das Inertgas abziehen kann, um es über Leitung 73 wieder in das zentrale Rohr 78 zu drücken. Dort reißen die Gasblasen Aufwachskörper und das Wasser mit und wälzen diesen Inhalt um. In den Ecken 20 und 21, die sich diagonal gegenüberliegen, sind jeweils Schächte 19 vorgesehen, in denen Tauchpumpen, Wächter oder Messgeräte befestigt werden können. Die Achsrichtungen 18 des Zulauf 16 und des Ablaufs 17 sind parallel zueinander ausgerichtet und stehen senkrecht zu den jeweiligen Wandlungen. Zu- und Ablauf 16,17 münden jeweils in einem Schacht 19.

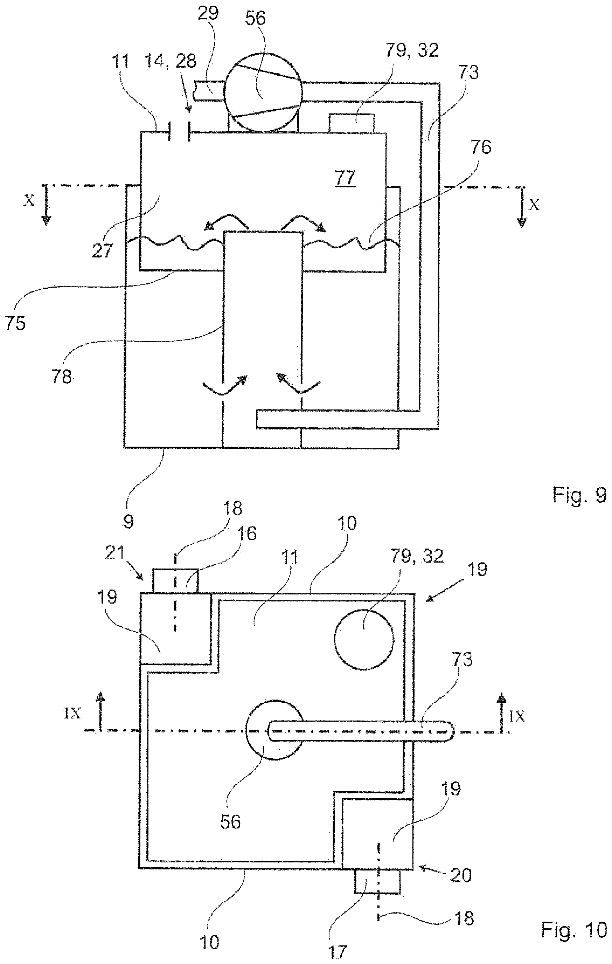

In den Figuren 9 und 10 ist ein Modul 14 als Einheit 28 zur Nitrifikation gezeigt. Eine solche Einheit ist grundsätzlich ähnlich aufgebaut wie die in den Figuren 7 und 8 gezeigte Einheit. Im Unterschied zu dieser wird jedoch Luft vom Gebläse 56 angesaugt und kein inertes Gas in das Modul gedrückt. Die Luft kommt über die Ansaugleitung 29 Luft aus dem Hohlraum 30 (Figur 5) unterhalb der Abdeckung 31 (Figur 5) und wird dann über Leitung 73 wieder unterhalb des Wasserspiegels 76 in das Modul eingeblasen. Über die Öffnung 79 kann die zugeführte Luft als Abluft in eine Abluftleitung 32 geführt werden, aus der Saugzug 58 die Abluft durch den Rekuperator 33 und durch Leitung 59 in die Atmosphäre entlässt (Figur 3).

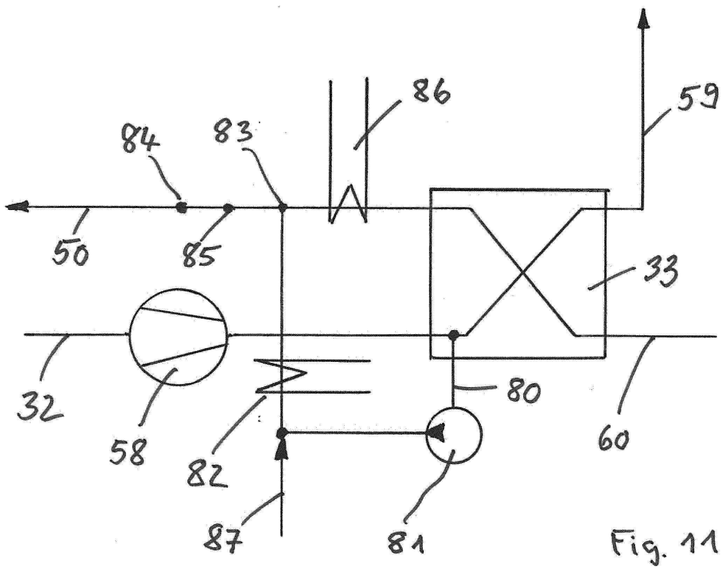

Figur 11 zeigt das Schema zur Konditionierung der Zuluft. Der Saugzug 58 saugt die Abluft aus Leitung 32 an und drückt sie durch den Luft-Luft-Wärmetauscher 33 über Leitung 59 in die Atmosphäre. Im Wärmetauscher 33 wird die Abluft von der durch Leitung 60 zuströmenden Zuluft gekühlt, so dass sich Kondensat in der Ablauft bildet, das über Kondensatleitung 80 der Pumpe 81 zugeleitet wird. Diese drückt es ggf nach einer Erwärmung oder Verdampfung mittels Heizung 82 über eine Düse 83 als Dampf oder Nebel in die Leitung 50. Ein Feuchtigkeitssensor 84 in Leitung 50 misst den Sättigungsgrad der Zuluft, so dass die Feuchtigkeit Zuluft bei der von Temperatursensor 85 gemessenen Temperatur geregelt werden kann. Die Temperatur der Zuluft kann bei Bedarf zusätzlich noch von Heizung 86 erhöht werden. Reicht das anfallende Kondensat nicht zur Sättigung der Zuluft aus, so kann über Frischwasserleitung 87 auch anderes Wasser zur Konditionierung der Zuluft benutz werden.

### Bezugszeichenliste

- 1: Kreislaufanlage
- 2: Hälterungsbecken
- 3: biologischen Filter
- 4: Wasserbehandlungseinheiten
- 5: zum Eintragen von Sauerstoff, Oberflächenbelüfter, Wellbahnbelüfter
- 6: zum Entkeimen
- 7: zum Entschäumen
- 8: mechanischen Filtern
- 9: Boden
- 10: Wandungen
- 11: Abdeckung
- 12: geschäumtes Material
- 13: verstärkte Oberfläche
- 14: Modul
- 15: Grundriss
- 16: Zulauf
- 17: Ablauf
- 18: Achsrichtungen
- 19: Schacht
- 20: Ecken
- 21: Ecken
- 22: Wasserkreislauf
- 23: Master
- 24: Slave
- 25: Wandung entfernbar
- 26: Wasserbehandlungseinheit zur Denitrifikation
- 27: Haube
- 28: Wasserbehandlungseinheit zur Nitrifikation
- 29: Ansaugleitung
- 30: Hohlraum
- 31: Abdeckung des Hälterungbeckens
- 32: Abluftleitung
- 33: Rekuperator, Wärmetauscher
- 34: Auslassleitung
- 35: Tasche
- 36: Glasfasernetz
- 37: Schussfaden
- 38: Material Matrix
- 39: Druckarmierung, Feinputz
- 40: Kettfaden
- 41: Leitung
- 42: Leitung
- 43: Brauchwasserleitung
- 44: Richtung
- 45: Zirkulationspumpe
- 46: weitere Zirkulationspumpe
- 47: Leitung
- 48: Leitung
- 49: Vorlaufbecken
- 50: Leitung
- 51: Leitung
- 52: Absetzbecken
- 53: Leitung
- 54: Kanalisation
- 55: Leitung
- 56: Gebläse
- 57: Abluftleitung
- 58: Saugzug
- 59: Leitung, Abluftleitung
- 60: Ansaugleitung, Zuluftleitung
- 61: Gebläse
- 62: Leitung
- 63: Richtung
- 64: Flurniveau
- 65: Tauchpumpe
- 66: Niveauwächter
- 67: Ein-/Aus-Schalter
- 68: Versorgungskabel
- 69: Steckdose
- 70: Signal Kabel
- 71: Steckvorrichtung
- 72: Gebläse
- 73: Leitung
- 74: Klotz
- 75: Kante
- 76: Wasserspiegel
- 77: Gasraum
- 78: zentrales Rohr
- 79: Öffnung
- 80: Kondensatleitung
- 81: Pumpe
- 82: Heizung
- 83: Düse
- 84: Feuchtesensor
- 85: Temperatursensor
- 86: Heizung
- 87: Frischwasserleitung
- 88 89 90 91: Verbindungsleitung
- 92: Wasserniveau
- 93: Säule

## Patentansprüche

1. Verfahren zum Hältern von Fischen oder anderen im Wasser lebenden Arten in einer Kreislaufanlage (1) mit mindestens einem Hälterungsbecken (2), mindestens einem biologischen Filter (3) sowie ggf. weiteren Wasserbehandlungseinheiten (4) z.B. zum Eintragen von Sauerstoff (5), zum Entkeimen (6), zum Entschäumen (7), zum mechanischen Filtern (8), wobei der Anlage durch Verbindungsleitungen, mindestens einer Zuluftleitung (60) Zuluft zu oberhalb eines Wasserspiegels im Hälterungsbecken (2) gebildeten Hohlraum (30) zugeleitet und durch mindestens einer Abluftleitung (59) Abluft von oberhalb des Wasserspiegels im Hälterungsbecken (2) gebildeten Hohlraum (30) abgeführt wird, **dadurch gekennzeichnet, dass** Zu- und Abluft durch einen Wärmetauscher (33) geleitet wird, in dem in der Abluft enthaltene Wärme auf die Zuluft übertragen wird und/oder die Zuluft auf das Temperaturniveau des Hälterungsbeckens angehoben wird.

2. Verfahren zum Hältern von Fischen oder anderen im Wasser lebenden Arten in einer Kreislaufanlage nach Anspruch 1, **dadurch gekennzeichnet, dass** die Zuluft angefeuchtet wird, vorzugsweise bis zur Sättigung, insbesondere unter Verwendung von anfallendem Kondensat.

3. Verfahren zum Hältern von Fischen oder anderen im Wasser lebenden Arten in einer Kreislaufanlage nach Anspruch 1 oder 2, **dadurch gekennzeichnet, dass** das Hälterungsbecken und mindestens eine Wasserbehandlungseinheit parallel an die Zuluft- und Abluftleitung geschaltet sind.

4. Verfahren zum Hältern von Fischen oder anderen im Wasser lebenden Arten in einer Kreislaufanlage nach Anspruch 1, 2 oder 3, **dadurch gekennzeichnet, dass** zur Sauerstoffanreicherung des Wassers eine Oberflächenbelüftung erfolgt, vorzugsweise mittels eines Wellbahnbelüfters (5).

5. Verfahren zum Hältern von Fischen oder anderen im Wasser lebenden Arten in einer Kreislaufanlage nach Anspruch 1, 2, 3 oder 4, **dadurch gekennzeichnet, dass** die Zuluft im vorgewärmten Zustand in den Hohlraum (30) unterhalb einer Abdeckung (11) des Hälterungsbeckens (2) zugeführt wird.

6. Verfahren zum Hältern von Fischen oder anderen im Wasser lebenden Arten in einer Kreislaufanlage nach Anspruch 1, 2, 3, 4 oder 5, **dadurch gekennzeichnet, dass** im Wärmetauscher (33) anfallendes Kondensat in den Wasserkreislauf eingespeist wird.

7. Verfahren zum Hältern von Fischen oder anderen im Wasser lebenden Arten in einer Kreislaufanlage nach einem der vorstehenden Ansprüche, **dadurch gekennzeichnet, dass** mindestens das Becken (2) und/oder das biologische Filter (3) eine Abdeckung (11) aufweist, wobei ein Hohlraum (30) zwischen Wasseroberfläche und Abdeckung des Hälterungsbeckens entsteht, aus dem über eine Leitung (29) Luft für die Nitrifikation durch das Filter (28) gedrückt wird.

8. Verfahren zum Hältern von Fischen oder anderen im Wasser lebenden Arten in einer Kreislaufanlage nach einem der vorhergehenden Ansprüche, **dadurch gekennzeichnet, dass** Luft von einem Gebläse (61) über Leitungen (50 und 62) als Frischluft zunächst einem Becken (2). oberhalb der Wasseroberfläche zugeführt wird, vorzugsweise so, dass sich eine zur Wasserströmung entgegengesetzte Luftströmung ergibt.

9. Verfahren zum Hältern von Fischen oder anderen im Wasser lebenden Arten in einer Kreislaufanlage nach einem der vorhergehenden Ansprüche, **dadurch gekennzeichnet, dass** für eine Nitrifikationsstufe notwendige Luft aus dem Hohlraum (30) über einem Becken (2) abgesaugt wird und mit Wasserdampf gesättigt sowie mit annähernder Wassertemperatur einer Nitrifikationsstufe (28) zugeführt wird.

10. Verfahren zum Hältern von Fischen oder anderen im Wasser lebenden Arten in einer Kreislaufanlage nach einem der vorhergehenden Ansprüche, **dadurch gekennzeichnet, dass** Luft über eine Ansaugleitung (29) aus dem Hohlraum (30) des Beckens (Figur 5) unterhalb der Abdeckung (31) (Figur 5) und über Leitung (73) wieder unterhalb des Wasserspiegels (76) in das Modul (28) zur Nitrifikation eingeblasen wird und über eine Öffnung (79) als Abluft in eine Abluftleitung (32) geführt wird, aus der ein Saugzug (58) die Abluft durch den Wärmetauscher (33) in die Atmosphäre entlässt.

11. Kreislaufanlage zum Hältern von Fischen oder anderen im Wasser lebenden Arten, insbesondere zur Durchführung des Verfahrens nach einem der vorhergehenden Ansprüche 1 bis 10, wobei die Kreislaufanlage eine Zuluftleitung (60) zur Zuführung von Frischluft und eine Abluftleitung (59) zur Abführung von Abluft aufweist, wobei Verbindungsleitugen zu oberhalb eines Wasserspiegels in den Hälterungsbecken (2) gebildeten Hohlraums (30), mindestens einem biologischen Filter (3) sowie ggf. weiteren Wasserbehandlungseinheiten (4) z.B. zum Eintragen von Sauerstoff (5), zum Entkeimen (6), zum Entschäumen (7), zum mechanischen Filtern (8) für einen Luftaustausch vorgesehen sind und **dadurch gekennzeichnet, dass** ein Wärmetauscher (33) vorgesehen ist, um die Wärme aus der Abluft zurückzugewinnen und die Zuluft auf das Temperaturniveau des Hälterungsbeckens zu erwärmen.

12. Kreislaufanlage nach Anspruch 11, **dadurch gekennzeichnet, dass** mindestens ein Modul (14), insbesondere eine Wasserbehandlungseinheit zur Denitrifikation (26) und/oder Nitrifikation (28), mit mindestens einer teilweise eintauchenden Haube (27) versehen ist.

13. Kreislaufanlage nach einem der vorhergehenden Ansprüche 11 oder 12, **dadurch gekennzeichnet, dass** mindestens ein Modul (14), insbesondere eine Wasserbehandlungseinheit zur Nitrifikation (28), eine Ansaugleitung (29) zu einem Hohlraum (30) unter der Abdeckung (31) des mindestens einen Hälterungbeckens (2) aufweist.

14. Kreislaufanlage nach einem der vorhergehenden Ansprüche 11 bis 13, **dadurch gekennzeichnet, dass** mindestens ein Modul (14), insbesondere eine Wasserbehandlungseinheit zur Nitrifikation (28), eine Abluftleitung (32) zu einem Wärmetauscher aufweist, wobei der Wärmetauscher (33) eine Auslassleitung (34) für Frischluft zum Hohlraum (30) unter der Abdeckung (31) des mindestens einen Hälterungbeckens (2) aufweist.

15. Kreislaufanlage nach einem der vorhergehenden Ansprüche 11 bis 14, **dadurch gekennzeichnet, dass** zur Sauerstoffanreicherung des Wassers ein Oberflächenbelüfter (5) vorgesehen ist.

## Claims

1. Method for holding fish or other aquatic species in a circulation system (1) with at least one holding tank (2), at least one biological filter (3) as well as optionally further water treatment units (4), for example for the input of oxygen (5), for sterilization (6), for defoaming (7), for mechanical filtering (8), wherein to the system through connection lines, at least through one inflowing air line (60), inflowing air is conducted into a hollow volume (30) formed above a water level in the holding tank (2) and, through at least one outflowing air line (59), outflowing air is removed from the hollow volume (30) formed above the water level in the holding tank (2), **characterized in that** inflowing and outflowing air is conducted through a heat exchanger (33) in which heat contained in the outflowing air is transferred to the inflowing air and/or the inflowing air is raised to the temperature level of the holding tank.

2. Method for holding fish or other aquatic species in a circulation system as in claim 1, **characterized in that** the inflowing air is humidified, preferably to saturation, in particular using accumulated condensate.

3. Method for holding fish or other aquatic species in a circulation system as in claim 1 or 2, **characterized in that** the holding tank and at least one water treatment unit are connected in parallel to the inflowing air line and the outflowing air line.

4. Method for holding fish or other aquatic species in a circulation system as in claim 1, 2 or 3, **characterized in that** for the oxygen enrichment of the water surface aeration is carried out, preferably by means of a corrugated plate aerator (5).

5. Method for holding fish or other aquatic species in a circulation system as in claim 1, 2, 3, or 4, **characterized in that** the inflowing air is supplied in the preheated state to the hollow volume (30) underneath a covering (11) of the holding tank (2).

6. Method for holding fish or other aquatic species in a circulation system as in claim 1, 2, 3, 4 or 5, **characterized in that** condensate accumulating in the heat exchanger (33) is supplied into the water circulation.

7. Method for holding fish or other aquatic species in a circulation system as in one of the preceding claims, **characterized in that** at least the tank (2) and/or the biological filter (3) comprise or comprises a covering (11), whereby a hollow volume (30) is formed between the water surface and the covering of the holding tank, from which holding tank air is pushed via a duct (29) through the filter (28) for nitrification.

8. Method for holding fish or other aquatic species in a circulation system as in one of the preceding claims, **characterized in that** air is initially supplied from a blower (61) across lines (50 and 62) as fresh air to a tank (2) above the water surface, preferably such that an air flow counter to the water flow is generated.

9. Method for holding fish or other aquatic species in a circulation system as in one of the preceding claims, **characterized in that** air necessary for a nitrification stage is drawn from the hollow volume (30) above a tank (2) and, after saturation with water vapor as well as at approximate water temperature, is supplied to a nitrification stage (28).

10. Method for holding fish or other aquatic species in a circulation system as in one of the preceding claims, **characterized in that** air [is drawn] across a suction line (29) from the hollow volume (30) of the tank (2) (Figure 5) underneath the covering (31) (Figure 5) and across line (73) is again blown below the water level (76) into the module (28) for nitrification and is conducted through an opening (79) as outflowing air into an outflowing air line (32), from which a forced draft (58) discharges the outflowing air through the heat exchanger (33) into the atmosphere.

11. Circulation system for holding fish or other aquatic species, in particular for carrying out the method as in one of the preceding claims 1 to 10, wherein the circulation system comprises an inflowing air line (60) for supplying fresh air and an outflowing air line (59) for the discharge of outflowing air, wherein are provided connection lines to a hollow volume (30) formed above a water level in the holding tanks (2), at least one biological filter (3) as well as optionally further water treatment units (4), for example for the input of oxygen (5), for sterilization (6), for defoaming (7), for mechanical filtering (8), for an air exchange and **characterized in that** a heat exchanger (33) is provided in order to recover the heat from the outflowing air and to heat the inflowing air to the temperature level of the holding tank.

12. Circulation system as in claim 11, **characterized in that** at least one module (14), in particular a water treatment unit for denitrification (26) and/or nitrification (28) is or are provided with at least one partially immersed hood (27).

13. Circulation system as in one of the preceding claims 11 or 12, **characterized in that** at least one module (14), in particular a water treatment unit for nitrification (28), comprises a suction line (29) to a hollow volume (30) underneath the covering (31) of the at least one holding tank (2).

14. Circulation system as in one of the preceding claims 11 to 13, **characterized in that** at least one module (14), in particular a water treatment unit for nitrification (28), comprises an outflowing air line (32) to a heat exchanger, wherein the heat exchanger (33) comprises an outlet line (34) for fresh air to the hollow volume (30) underneath the covering (31) of the at least one holding tank (2).

15. Circulation system as in one of the preceding claims 11 to 14, **characterized in that** for the oxygen enrichment of the water a surface aerator (5) is provided.

## Revendications

1. Procédé de maintien de poissons ou d'autres espèces vivant dans l'eau dans un circuit fermé (1) doté d'au moins un bassin de maintien (2), d'au moins un filtre biologique (3) ainsi que, le cas échéant, d'unités supplémentaires de traitement de l'eau (4) par exemple pour l'oxygénation (5), pour la désinfection (6), pour l'écumage (7), pour la filtration mécanique (8), dans lequel, l'air entrant est amené, par au moins un conduit d'entrée d'air (60) dans le circuit au-dessus du niveau de l'eau dans un espace vide (30) aménagé dans le bassin de maintien (2) et l'air sortant est évacué par au moins un conduit de sortie d'air (59) hors du dessus du niveau de l'eau dans l'espace vide (30) aménagé dans le bassin de maintien (2), **caractérisé en ce que** l'air entrant et sortant sont conduits au travers d'un échangeur de chaleur (33), dans lequel la chaleur contenue par l'air sortant est transmise à l'air entrant et/ou l'air entrant est élevé au niveau de température du bassin de maintien.

2. Procédé de maintien de poissons ou d'autres espèces vivant dans l'eau dans un circuit fermé selon la revendication 1, **caractérisé en ce que** l'air entrant est humidifié, de préférence jusqu'à saturation, en particulier par utilisation du condensat obtenu.

3. Procédé de maintien de poissons ou d'autres espèces vivant dans l'eau dans un circuit fermé selon la revendication 1 ou 2, **caractérisé en ce que** le bassin de maintien et au moins une unité de traitement de l'eau sont couplés en parallèle aux conduits d'entrée d'air et de sortie d'air.

4. Procédé de maintien de poissons ou d'autres espèces vivant dans l'eau dans un circuit fermé selon la revendication 1, 2 ou 3 **caractérisé en ce que** pour l'enrichissement en oxygène de l'eau une aération par insufflation d'air se produit, de préférence au moyen d'un aérateur statique à plaques ondulées (5).

5. Procédé de maintien de poissons ou d'autres espèces vivant dans l'eau dans un circuit fermé selon la revendication 1, 2, 3 ou 4 **caractérisé en ce que** l'air entrant à l'état préchauffé est conduit dans l'espace vide (30) en dessous d'un couvercle (11) du bassin de maintien (2).

6. Moteur Procédé de maintien de poissons ou d'autres espèces vivant dans l'eau dans un circuit fermé selon la revendication 1, 2, 3, 4 ou 5 **caractérisé en ce que** le condensat produit dans l'échangeur de chaleur (33) est injecté dans le circuit d'eau.

7. Procédé de maintien de poissons ou d'autres espèces vivant dans l'eau dans un circuit fermé selon l'une des revendications précédentes **caractérisé en ce qu'**au moins le bassin (2) et/ou le filtre biologique (3) comporte un couvercle (11), dans lequel résulte un espace vide (30) entre le niveau de l'eau et le couvercle du bassin de maintien, depuis lequelle de l'air est évacué au moyen d'un conduit (29) et poussé au travers du filtre (28) pour la nitrification.

8. Procédé de maintien de poissons ou d'autres espèces vivant dans l'eau dans un circuit fermé selon l'une des revendications précédentes **caractérisé en ce que** l'air est conduit depuis un ventilateur (61) au moyen de conduits (50 et 62) en tant qu'air frais, d'abord à un bassin (2), au-dessus du niveau de l'eau, de préférence, de sorte qu'un flux d'air se produit dans le sens contraire du flux d'eau.

9. Procédé de maintien de poissons ou d'autres espèces vivant dans l'eau dans un circuit fermé selon l'une des revendications précédentes **caractérisé en ce que** l'air nécessaire pour une étape de nitrification est aspiré de l'espace vide (30) au-dessus d'un bassin (2) et est saturé de vapeur d'eau et amené approximativement à la température de l'eau d'une étape de nitrification (28).

10. Procédé de maintien de poissons ou d'autres espèces vivant dans l'eau dans un circuit fermé selon l'une des revendications précédentes **caractérisé en ce que** l'air est réinsufflé, au moyen d'un conduit d'aspiration (29) et du conduit (73), sous le niveau de l'eau (76) dans le module de nitrification (28) depuis l'espace vide (30) du bassin (figure 5) sous le couvercle (31)(figure 5) et est conduit par une ouverture (79) comme air sortant dans un conduit d'air sortant (32), d'où une aspiration (58) évacue l'air sortant dans l'atmosphère au travers de l'échangeur de chaleur (33).

11. Circuit fermé de maintien de poissons ou d'autres espèces vivant dans l'eau, en particulier pour la mise en oeuvre d'un procédé selon l'une des revendications précédentes 1 à 10, dans lequel le circuit fermé comporte au moins un conduit d'air entrant (60) pour faire entrer l'air frais et un conduit d'air sortant (59) pour évacuer l'air sortant, dans lequel des conduits de raccordement sont prévus vers l'espace vide (30) situé au-dessus du niveau d'eau du bassin de maintien (2), vers au moins un filtre biologique (3) ainsi que, le cas échéant, des unités supplémentaires de traitement de l'eau (4) par exemple pour l'oxygénation (5), pour la désinfection (6), pour l'écumage (7), pour la filtration mécanique (8), pour un échange d'air, et **caractérisé en ce qu'**un échangeur de chaleur (33) est prévu afin de récupérer la chaleur de l'air sortant et de chauffer l'air entrant au niveau de le température du bassin de maintien.

12. Circuit fermé selon la revendication 11, **caractérisé en ce qu'**au moins un module (14), en particulier une unité de traitement de l'eau pour la dénitrification (26) et/ou la nitrification (28), est doté d'au moins une coiffe (27) partiellement immergée.

13. Circuit fermé selon une des revendications précédentes 11 ou 12, **caractérisé en ce qu'**au moins un module (14), en particulier une unité de traitement de l'eau pour la nitrification (28), comporte un conduit d'aspiration (29) raccordé à un espace vide (30) sous le couvercle (31) du bassin du maintien (2).

14. Circuit fermé selon une des revendications précédentes 11 à 13, **caractérisé en ce qu'**au moins un module (14), en particulier une unité de traitement de l'eau pour la nitrification (28), comporte un conduit d'air sortant (32) vers un échangeur de chaleur, dans lequel l'échangeur de chaleur (33) comporte un conduit d'admission (34) pour l'air frais raccordé à un espace vide (30) sous le couvercle (31) du bassin du maintien (2).

15. Circuit fermé selon une des revendications précédentes 11 à 14, **caractérisé en ce qu'**un aérateur par insufflation d'air (5) est prévu pour l'enrichissement en oxygène de l'eau.
